# NEUE EUROPÄISCHE PATENTSCHRIFT

(11) **EP 2 657 051 B2**
(45) Veröffentlichungstag und Bekanntmachung des Hinweises auf die Entscheidung über den Einspruch: **23.08.2023**
(45) Hinweis auf die Patenterteilung: 05.12.2018
(21) Anmeldenummer: 13001794.0
(22) Anmeldetag: 08.04.2013
(51) Int. Cl.: B60D 1/07, B60D 1/24, B60D 1/54, B60R 9/06

(54) **Kupplungsanordnung für einen Heckträger**
Coupling assembly for a rear carrier
Agencement de couplage pour un support de toit

(30) Priorität: 25.04.2012 DE 102012008124
(43) Veröffentlichungstag der Anmeldung: 30.10.2013
(73) Patentinhaber: WESTFALIA - Automotive GmbH, 33378 Rheda-Wiedenbrück (DE)
(72) Erfinder: Wyrich, Martin, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 0 799 732
- EP-A1- 1 533 149
- EP-A1- 1 557 298
- EP-A1- 1 557 299
- EP-A1- 1 557 300
- EP-A1- 2 033 845
- EP-A2- 1 160 105
- EP-A2- 1 225 067
- EP-A2- 1 757 488
- WO-A1-03/039913
- DE-A1- 3 020 367
- DE-A1- 4 315 292
- DE-A1- 10 309 327
- DE-A1- 10 338 724
- DE-A1- 19 826 618
- DE-A1-102007 014 442
- DE-A1-102007 043 126
- DE-A1-102008 047 372
- DE-A1-102008 057 181
- DE-A1-102010 032 991
- DE-A1-102010 045 357
- DE-U1-202010 003 623
- FR-A1- 2 820 381
- FR-A1- 2 820 382

## Beschreibung

Die Erfindung betrifft eine Kupplungsanordnung für ein Kraftfahrzeug zum Befestigen eines Heckträgers. Die Erfindung betrifft ferner einen Heckträger für eine derartige Kupplungsanordnung.

Eine derartige Kupplungsanordnung geht z.B. aus FR 2 820 382 A1 hervor.

Zur Befestigung von Heckträgern ist es üblich, beispielsweise eine oder zwei Steckaufnahmen am Heck des Kraftfahrzeugs vorzusehen, in die dann Tragarme des Heckträgers eingesteckt werden. Dies ist bei einer Kupplungsanordnung aus EP 1 757 488 A2 der Fall. Allerdings sind die Steckaufnahmen bei Nichtgebrauch störend, d.h. sie müssen beispielsweise durch Abdeckungen verschlossen werden.

Es ist daher die Aufgabe der vorliegenden Erfindung, eine Kupplungsanordnung für ein Kraftfahrzeug bereitzustellen, die eine Befestigung eines Lastenträgers ermöglicht, aber bei Nichtgebrauch möglichst nicht stört.

Zur Lösung der Aufgabe ist eine Kupplungsanordnung für ein Kraftfahrzeug zum Befestigen eines Heckträgers, mit einem ersten Kupplungsarm und einem zweiten Kupplungsarm, gemäß der technischen Lehre des Anspruchs 1 vorgesehen.

Es ist ein Grundgedanke der vorliegenden Erfindung, dass die Kupplungsarme beweglich gelagert sind, so dass sie bei Nichtgebrauch beispielsweise unter die Heckkontur des Kraftfahrzeugs hinunter, insbesondere unter einer Heckschürze des Kraftfahrzeugs hindurch tauchen können, so dass die jeweilige Kupplungsbasis am ersten und zweiten Kupplungsarm möglichst nicht sichtbar ist, wenn eine Person hinter dem Kraftfahrzeug steht. Zugleich können die Kupplungsarme bei Gebrauch bequem bereitgestellt werden. Die Kupplungsbasen stehen in der Gebrauchsstellung vor das Heck des Kraftfahrzeugs vor, so dass der Lastenträger besonders einfach befestigbar ist.

Mithin ist es also ein Grundgedanke der Erfindung, dass ein jeweiliger Kupplungsarm zum Verstellen seiner Kupplungsbasis mittels der Lageranordnung so gelagert ist,
dass die Kupplungsbasis unter einem Stoßfänger des Kraftfahrzeugs, an dem die Kupplungsanordnung montiert ist, vorbei bewegbar ist.

Zwar sieht eine bevorzugte und in der Zeichnung näher dargestellte Ausführungsform der Erfindung vor, dass zwei Kupplungsarme vorhanden sind. Selbstverständlich wäre es denkbar, auch weitere Kupplungsarme in dieser Art vorzusehen.

Ein Kupplungsarm der erfindungsgemäßen Kupplungsanordnung kann gekrümmt und/oder gekröpft und/oder geradlinige Armabschnitte aufweisen, so dass eine Anpassung an die geometrischen Gegebenheiten des Kraftfahrzeugs gut gelingt.

Die Lageranordnung umfasst beispielsweise ein Schwenklager, ein Schiebelager oder ein Schwenk-Schiebelager. Somit können die Kupplungsarme beispielsweise zwischen der Gebrauchsstellung und der Nichtgebrauchsstellung geschwenkt und/oder verschoben werden. Je nach vorhandenem Bauraum zwischen beispielsweise Stoßfänger und Karosserieheck des Kraftfahrzeuges können unterschiedliche Lagerkonzepte gewählt werden.

Es versteht sich, dass jeder Kupplungsarm anders gelagert sein kann, d.h. dass beispielsweise ein Kupplungsarm mittels eines Schwenklagers, der andere mittels eines Schiebelagers gelagert werden kann.

Eine Ausführungsform der Erfindung kann beispielsweise vorsehen, dass jeder Kupplungsarm an einem individuellen Lager gelagert ist, so dass der jeweilige Kupplungsarm unabhängig von dem anderen Kupplungsarm bezüglich einer Karosserie des Kraftfahrzeugs beweglich gelagert ist.

Eine andere Ausführungsform der Erfindung kann vorsehen, dass beide Kupplungsarme an einem gemeinsamen Lagerteil angeordnet sind, so dass sie simultan betätigt werden können. Beispielsweise kann ein Schwenklager mit einem schwenkbar gelagerten Lagerteil vorgesehen sein, an dem zwei Kupplungsarme angeordnet und somit gemeinsam schwenkbeweglich gelagert sind. Die Kupplungsarme sind an dem gemeinsamen Lagerteil vorzugsweise feststehend angeordnet.

Es ist aber auch möglich, dass an dem gemeinsamen Lagerteil mindestens einer der Kupplungsarme beweglich gelagert ist, der andere Kupplungsarm fest steht, so dass auch auf diesem Wege ein individuelles Verstellen des einen Kupplungsarms relativ zum andern Kupplungsarm möglich ist.

Weiterhin ist eine Verriegelungseinrichtung zum Verriegeln mindestens eines der Kupplungsarme in der Gebrauchsstellung und/oder der Nichtgebrauchsstellung vorteilhaft.

Es ist möglich, dass nur einer der Kupplungsarme verriegelt wird, der andere Kupplungsarm quasi durch den montierten Lastenträger ortsfest festgelegt wird. Eine Verriegelung eines Kupplungsarms kann z.B. auch wegfallen, wenn beispielsweise ein selbsthemmender Antrieb für den jeweiligen Kupplungsarm vorgesehen ist. Selbstverständlich ist dennoch in diesen und anderen Fällen eine zusätzliche Verriegelung, insbesondere eine Verspannung, eines jeweiligen Kupplungsarms vorteilhaft, so dass er beispielsweise in der Gebrauchsstellung, wenn der Lastenträger befestigt ist, möglichst fest steht.

Vorteilhaft ist nämlich eine Antriebseinrichtung zum Antreiben mindestens eines Kupplungsarms zwischen der Gebrauchsstellung und der Nichtgebrauchsstellung vorgesehen. Selbstverständlich ist es zweckmäßig, wenn beide oder alle Kupplungsarme mittels einer Antriebseinrichtung betätigbar sind.

Die Antriebseinrichtung kann beispielsweise manuell betätigbar sein, d.h. dass beispielsweise eine Kurbel oder ein sonstiges Hand-Betätigungselement vorhanden ist, um den jeweiligen Kupplungsarm oder die Kupplungsarme anzutreiben. Vorzugsweise ist ein Übertragungselement oder -organ zwischen einem bequem zugänglichen Ort für das Hand-Betätigungselement, das z.B. im Gepäckraum des Kraftfahrzeugs angeordnet ist, und dem anzutreibenden Kupplungsarm vorgesehen.

Die Antriebseinrichtung umfasst zweckmäßigerweise auch ein Getriebe, insbesondere ein kraftverstärkendes Untersetzungsgetriebe, so dass sie im Sinne einer Kraftverstärkung wirkt. Das Getriebe umfasst zweckmäßigerweise ein Seilzuggetriebe und/oder ein Kurbelgetriebe und/oder ein Zahnradgetriebe. Weiterhin kann die Antriebseinrichtung auch einen Motor aufweisen, zum Beispiel einen Elektromotor, einen fluidischen (z.B. pneumatischen oder hydraulischen) Motor oder dergleichen.

Bevorzugt ist die Antriebseinrichtung zum Verspannen des Heckträgers mit den Kupplungsarmen ausgestaltet, wenn der Heckträger an den Kupplungsarmen montiert ist. Beispielsweise kann die Antriebseinrichtung den einen Kupplungsarm zum andern Kupplungsarm hin oder von diesem weg antreiben, um so eine Verspannung zu bewirken. Es ist aber auch möglich, dass die Antriebseinrichtung den Heckträger in Richtung eines Anschlages, zum Beispiel eines Anschlagvorsprungs am Kraftfahrzeug, beaufschlagt, um den Heckträger zu verspannen.

Bevorzugt ist eine Steuerung zum Ansteuern mindestens eines Antriebsmotors der Antriebseinrichtung oder der vorgenannten Verriegelungseinrichtung vorgesehen, das heißt dass der Antriebsmotor, der mindestens einen Kupplungsarm antreibt, oder der Antriebsmotor, der zur Verriegelung mindestens eines der Kupplungsarme dient, durch eine Steuerung der Kupplungsanordnung gesteuert wird. Alternativ wäre es möglich, dass beispielsweise eine Steuerung vom Kraftfahrzeug aus die Antriebsmotoren oder den Antriebsmotor ansteuert.

Bevorzugt ist die Steuerung zum wiederholten Ansteuerung des Antriebsmotors in Richtung der Gebrauchsstellung oder der Nichtgebrauchsstellung des mindestens einen Kupplungsarms während eines Fahrbetriebs im Sinne eines Beibehaltens der Gebrauchsstellung oder Nichtgebrauchsstellung ausgestaltet. Es findet also quasi ein Nachtakten statt, so dass der Kupplungsarm in der jeweiligen Stellung gehalten wird bzw. immer wieder in diese Richtung betätigt wird, falls er sich - was nicht gewünscht ist - aus der jeweiligen Stellung heraus bewegt hat.

Weiterhin ist die Steuerung zweckmäßigerweise dazu ausgestaltet und vorgesehen, dass sie während eines Fahrbetriebs des Kraftfahrzeugs eine Bewegung des (Kupplungsarm-)Antriebsmotors im Sinne eines Verlassens der Gebrauchsstellung oder der Nichtgebrauchsstellung des Kupplungsarms und/oder des (Verriegelungs-)Antriebsmotors gegen eine Entriegelung der Verriegelungseinrichtung blockiert. Dazu hat die Steuerung zweckmäßigerweise einen Eingang, insbesondere eine Datenbusschnittstelle, für ein Signal des Kraftfahrzeugs, das den Fahrbetrieb des Kraftfahrzeugs signalisiert, z.B. ein Geschwindigkeitssignal.

Erfindungsgemäß ist vorgesehen, dass der Kupplungsarm, insbesondere die Kupplungsbasis, des einen Kupplungsarms eine gegensinnige Bewegung zum anderen Kupplungsarm bzw. dessen Kupplungsbasis durchläuft. Somit durchlaufen der erste der zweite Kupplungsarm bei einer Verstellung zwischen der Gebrauchsstellung und der Nichtgebrauchsstellung eine gegensinnige Bewegung aufeinander zu oder voneinander weg.

Die Lageranordnung ist zweckmäßigerweise so ausgestaltet, dass die Kupplungsarme gegenüber einer Bewegung aus der Gebrauchsstellung in die Nichtgebrauchsstellung blockiert sind, wenn der Heckträger an den Kupplungsarmen montiert ist. Wenn also beispielsweise die Kupplungsarme aus der Gebrauchsstellung heraus in Richtung der Nichtgebrauchsstellung in einem Sinne voneinander weg oder aufeinander zu bewegt werden müssten, verhindert der angekuppelte Heckträger diese Bewegung. Die Kupplungsanordnung ist zweckmäßigerweise durch den Heckträger in der Gebrauchsstellung stabilisierbar und fixierbar.

Die Kupplungsbasis kann Verriegelungsele-mente und/oder Kupplungselemente zum Verriegeln und Kuppeln der Lastenträger-Kupplungseinrichtungen umfassen. Bevorzugt hat die Kupplungsbasis einen Kugelkopf, eine Steckaufnahme und einen Steckvorsprung oder einen sonstigen Kuppelkörper zur Montage der ersten oder zweiten Heckträger-Kupplungseinrichtungen.

Wie bereits angesprochen, kann mindestens eine Kupplungsbasis eine insbesondere motorisch antreibbare Fixiereinrichtung zum Fixieren der jeweiligen Heckträger-Kupplungseinrichtungen aufweist. Die Fixiereinrichtung umfasst beispielsweise einen Riegel, einen Klemmkörper oder dergleichen, um die Heckträger-Kupplungseinrichtungen zu Verriegeln oder zu klemmen. Selbstverständlich kann ein manuelles Konzept vorgesehen sein, das heißt dass der Bediener doch eine manuelle Bedienhandlung die Fixierung oder das Lösen der Fixierung bewirkt. Bevorzugt ist jedoch ein Antriebsmotor. Weiterhin ist es bevorzugt, wenn die Fixiereinrichtung in Richtung der Fixierstellung federbeaufschlagt ist. Das schafft eine besondere Sicherheit.

Erfindungsgemäß ist vorgesehen, dass an mindestens einem der Kupplungsarme eine elektrische Stromversorgungseinrichtung, beispielsweise eine Steckdose, zur elektrischen Stromversorgung des Heckträgers angeordnet ist. Die Stromversorgungseinrichtung schwenkt beispielsweise zwischen der Nichtgebrauchsstellung und der Gebrauchsstellung mit. Jedenfalls ist der Vorteil dabei, dass die Stromversorgungseinrichtung stets vor Ort und bequem zugänglich ist, wenn die Kupplungsanordnung ihre Gebrauchsstellung einnimmt.

Der oben bereits angesprochene Heckträger ist ebenfalls vorteilhaft ein Bestandteil des erfindungsgemäßen Konzeptes. Die erste und/oder die zweite Heckträger-Kupplungseinrichtung weist beispielsweise eine Klemmeinrichtung und/oder eine Verriegelungseinrichtung zum Verklemmen oder Verriegeln mit der jeweiligen Kupplungsbasis am ersten oder zweiten Kupplungsarm auf. Diese Klemmeinrichtung kann beispielsweise manuell betätigbar sein oder auch motorisch.

Die erste und/oder die zweite Heckträger-Kupplungseinrichtung weisen zweckmäßigerweise eine Steckaufnahme, einen Steckvorsprung oder einen Aufnahmekäfig zur Montage an der jeweiligen Kupplungsbasis der Kupplungsanordnung auf.

Nachfolgend werden Ausführungsbeispiele der Erfindung anhand der Zeichnung erläutert. Es zeigen:
- Figur 1a: eine an einem Kraftfahrzeug angeordnete erfindungsgemäße Kupplungsanordnung von frontal hinten, wobei deren Kupplungsarme in der Gebrauchsstellung sind, so dass ein schematisch angedeuteter Heckträger an die Kupplungsarme angekuppelt ist,
- Figur 1b: die Anordnung gemäß Figur 1a, wobei die Kupplungsarme in eine Nichtgebrauchsstellung zum Kraftfahrzeug hin verstellt sind,
- Figur 2a: die Anordnung gemäß Figur 1a von oben,
- Figur 2b: die Anordnung gemäß Figur 1b von oben,
- Figur 3: eine Abwandlung der Kupplungsanordnung gemäß Figur 1a von hinten, deren Kupplungsarme in der Gebrauchsstellung sind,
- Figur 4: die Kupplungsanordnung gemäß Figur 3 von oben, wobei zusätzlich in gestrichelten Linien die Kupplungsarme in der Gebrauchsstellung dargestellt sind, in der sie voneinander weg verstellt sind,
- Figur 5a: die Kupplungsanordnung gemäß Figur 1b von der Seite,
- Figur 5b: die Kupplungsanordnung gemäß Figur 1a von der Seite,
- Figur 6a: eine alternative Kupplungsbasis für die Kupplungsanordnung gemäß der vorstehenden Figuren, die eine Steckaufnahme aufweist, sowie einen dazugehörigen Heck- oder Lastenträger mit einem Steckvorsprung, wobei beide Komponenten noch voneinander entfernt sind,
- Figur 6b: die Anordnung gemäß Figur 6a, jedoch mit an die Kupplungsbasis angekuppeltem Heckträger,
- Figur 7a: eine weitere alternative Kupplungsbasis mit einer Steckaufnahme, an die ein Steckvorsprung des Heckträgers angekuppelt und mittels einer Überwurfhülse fixiert werden kann, wobei beide Kupplungsteile noch voneinander entfernt sind,
- Figur 7b: die Anordnung gemäß Figur 7a, wobei die beiden Kupplungsteile miteinander verbunden sind,
- Figur 8a: eine schematische Darstellung eines Antriebskonzepts für eine weitere erfindungsgemäße Kupplungsanordnung von oben, wobei die Kupplungsarme in die Nichtgebrauchsstellung verstellt sind,
- Figur 8b: die Kupplungsanordnung gemäß Figur 8a, jedoch mit in die Gebrauchsstellung verstellten Kupplungsarmen,
- Figur 9: die Anordnung gemäß Figur 8b mit einem angekuppelten Heckträger, und
- Figur 10: eine Heckträger-Kupplungseinrichtungen des Heckträgers gemäß Figur 9 in Schrägperspektive.

Bei den nachfolgend erläuterten Ausführungsbeispielen sind gleiche oder gleichartige Komponenten mit den selben Bezugsziffern versehen, wobei teilweise Bezugsziffern verwendet sind, die sich um jeweils 100 voneinander unterscheiden, um Unterschiede deutlich zu machen.

An einem Querträger 90, der an einem Heck 91 eines Kraftfahrzeugs 92 befestigt ist und beispielsweise quer zu dessen Fahrtrichtung 93 verläuft, ist eine Kupplungsanordnung 10 zur Befestigung eines Heckträgers 50 angeordnet. Die Kupplungsanordnung 10 umfasst Kupplungsarme 11 und 12, die mittels Lagern 13 und 14 einer Lageranordnung 15 beweglich am Kraftfahrzeug 92 gelagert sind. Die Kupplungsarme 11 und 12 haben an ihren freien Enden jeweils eine Kupplungskugel 16, die eine Kupplungsbasis 17 zum Ankuppeln des Heckträgers 50 bildet.

Die Lager 13 und 14 sind in der Art von Kugellagern oder Taumellagern ausgestaltet und weisen jeweils ein fahrzeugfestes Lagerteil 18 sowie ein mit dem Kupplungsarm 11 oder 12 verbundenes Lagerteil 19 auf. Das Lagerteil 18 weist beispielsweise eine Art Kugel auf, während das Lagerteil 19 die Kugelpfanne bildet oder aufweist, die auf dieser Kugel gelagert ist. Das Lagerteil 19 kann einstückig mit dem Kupplungsarm 11, 12 sein oder auch ein separates Bauteil, wobei dann das Lagerteil 19 und der Kupplungsarm 11, 12 beispielsweise miteinander verschraubt oder verschweißt sind. Darauf kommt es jedoch nicht an.

Die fahrzeugfesten Lagerteile 18 sind an am Querträger 90 angeordneten Haltern 20 gehalten. Die Halter 20 stehen beispielsweise nach unten vor den Querträger 90 vor.

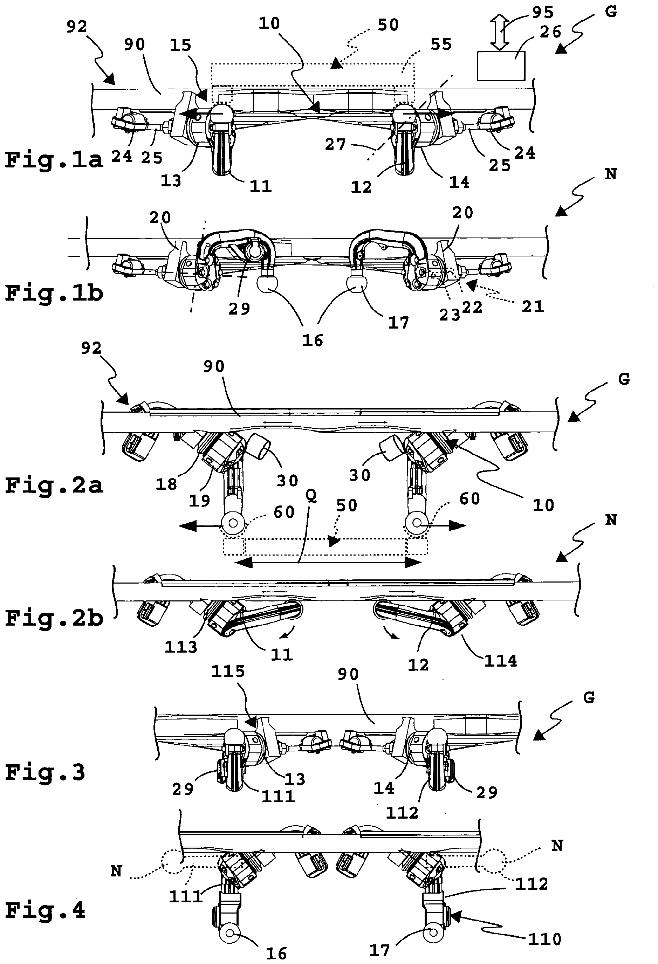

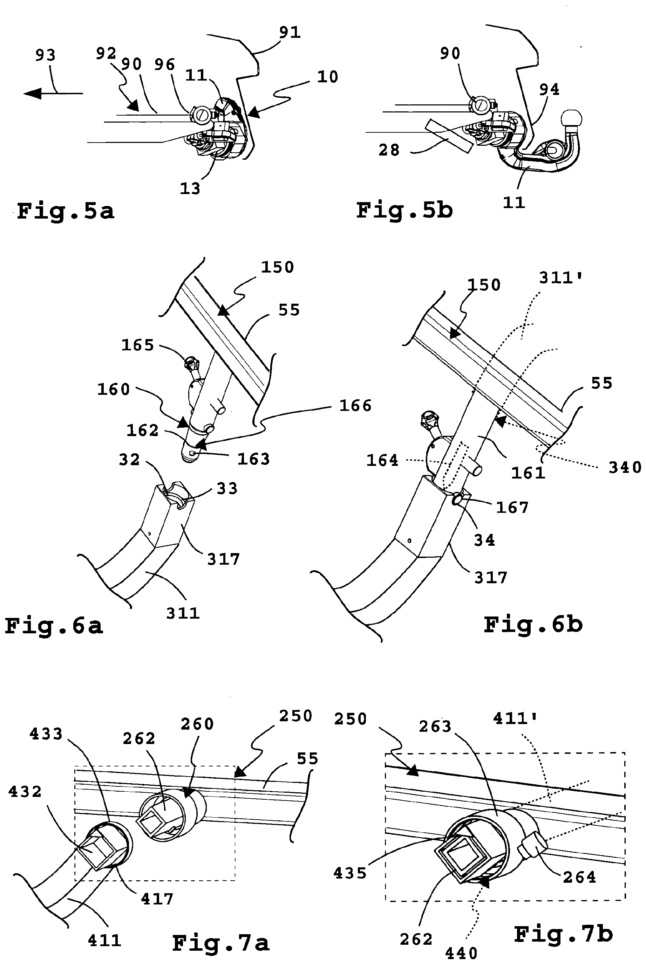

Mittels der Lager 13 und 14 können die beiden Kupplungsarme 11 und 12 individuell zwischen der in Figur 1a dargestellten Gebrauchsstellung G und der in Figur 1b dargestellten Nichtgebrauchsstellung N verstellt werden. In der Gebrauchsstellung G kann der Heckträger 50 an die Kupplungsbasis 17 eines jeweiligen Kupplungsarms 11, 12 angekuppelt werden, was in Figur 1a sowie 2a schematisch dargestellt ist. Während in der Gebrauchsstellung G die beiden Kupplungskugeln 16, also die jeweilige Kupplungsbasis 17, vor das Heck 91 des Kraftfahrzeugs 92 vorsteht, wobei die freien Enden der Kupplungsarme 11 und 12 jeweils nach oben zeigen, sind die Kupplungskugeln 16 bzw. Kupplungsbasen 17 in der Nichtgebrauchsstellung N hinter einen Stoßfänger 94 des Kraftfahrzeugs 92 zurück verstellt, so dass sie von hinten oben, was in Figur 5a deutlich wird, nicht gesehen werden können, also in einem gegenüber einer Sicht von außen abgedeckten Bereich des Kraftfahrzeugs 92 angeordnet sind. Selbstverständlich kann in der Nichtgebrauchsstellung N kein Heckträger 50 angekuppelt werden. Die Kupplungsarme 11 und 12 stören in der Nichtgebrauchsstellung N überhaupt nicht und beeinträchtigen zudem auch die Bodenfreiheit des Kraftfahrzeugs 92 nicht. Die Kupplungsarme 11, 12 sind zweckmäßigerweise in einem Zwischenraum zwischen einem Heckbereich einer Karosserie 96 des Kraftfahrzeugs 92 und dem Stoßfänger 94 angeordnet.

Die Kupplungsarme 11 und 12 sind in der Gebrauchsstellung G und der Nichtgebrauchsstellung N jeweils mittels einer Verriegelungseinrichtung 21 verriegelbar. Die Verriegelungseinrichtung 21 umfasst beispielsweise ein Betätigungselement 22, zum Beispiel eine Art Bolzen. Das Betätigungselement 22 ist beweglich am Lagerteil 18, beispielsweise dessen Innenraum, gelagert. Durch eine lineare Verstellung ist es beispielsweise möglich, dass das Betätigungselement 22 Formstücke 23 oder sonstige Verriegelungselemente in in der Zeichnung nicht näher dargestellte Verriegelungsaufnahmen am andern Lagerteil 19 hinein zu bewegen, so dass die Lagerteile 18 und 19 gegenüber einer Relativbewegung gesichert sind.

Selbstverständlich ist es vorteilhaft, wenn die Verriegelungseinrichtung 21 zusätzlich noch eine Verspannung derart bewirkt, dass die Kupplungsarme 11 und 12 fest in zumindest der Gebrauchsstellung G, vorzugsweise auch in der Nichtgebrauchsstellung N, verspannt bzw. in diese jeweilige Stellung geklemmt sind. Das ist jedoch nicht unbedingt notwendig, sondern als eine vorteilhafte Maßnahme zu verstehen.

Weiterhin ist es möglich, dass nur einer der Kupplungsarme 11 oder 12 mit einer Verriegelungseinrichtung 21 versehen ist.

Das Betätigungselement 22 ist zweckmäßigerweise durch eine in der Zeichnung nicht dargestellte Feder in die Verriegelungsstellung vor gespannt, in der es die Formstücke 23 in die Verriegelungsaufnahmen am andern Lagerteil 19 drückt.

Ein Antrieb 24 der Verriegelungseinrichtung 21 dient vorteilhaft dazu, das Betätigungselement 22 in Richtung der Entriegelungsstellung zu betätigen, in der die Formstücke 23 aus den Verriegelungsaufnahmen am Lagerteil 19 heraus gelangen können.

Der Antrieb 24 wirkt beispielsweise entgegen der Kraft der nicht dargestellten Feder und bildet sozusagen einen Entriegelungsantrieb. Selbstverständlich wäre es auch möglich, einen Verriegelungsantrieb vorzusehen, das heißt ein Antrieb, der beispielsweise das Betätigungselement 22 in Richtung der Verriegelungsstellung betätigen kann.

Der Antrieb 24 wirkt beispielsweise über ein Übertragungselement 25, insbesondere ein Zugorgan, zum Beispiel einen Seilzug, auf das Betätigungselement 22.

Die Antriebe 24 der im Prinzip zwei Verriegelungseinrichtungen 21 (jedem Lager 13 und 14 ist eine separate Verriegelungseinrichtung 21 zugeordnet) können über eine Steuerung 26 angesteuert werden. Die Steuerung 26, die beispielsweise einen Mikroprozessor und einen Speicher umfasst, in dem ein Programm abgelegt ist, das der Mikroprozessor ausführt, steuert die beiden Antriebe 24 in Richtung der Entriegelung an.

Selbstverständlich würde auch ein einzelner elektrischer Schalter genügen, um die Antriebe 24 einzuschalten und somit die Kupplungsarme 11 und 12 zu entriegeln. Wenn ein solcher Schalter beispielsweise im Gepäckraum oder Gepäckabteil des Kraftfahrzeugs 92 angeordnet ist, ist eine Fehlbedienung nahezu ausgeschlossen, da der Schalter nur dann betätigt werden kann, wenn das Gepäckabteil von hinten her offen ist, mithin also das Kraftfahrzeug 92 steht.

Vorteilhaft ist jedoch die Steuerung 26 dazu vorgesehen, die Betriebssicherheit der Kupplungsanordnung 10 zu gewährleisten. In nicht dargestellter Weise ist die Steuerung 26 mit dem Bordnetz 95 des Kraftfahrzeugs 92 verbunden und erhält von dort Informationen, ob das Kraftfahrzeug 92 steht oder fährt. Während eines Fahrbetriebs des Kraftfahrzeugs 92 blockiert die Steuerung 26 eine Entriegelung der Verriegelungseinrichtungen 21.

Selbstverständlich wäre es auch möglich, das jeweilige Betätigungselement 22 manuell zu betätigen. Dazu ist beispielsweise das Übertragungselement 25 so verlegt, dass sein freies Betätigungsende von einem Bediener bequem ergriffen oder mittels einer Betätigungseinrichtung betätigt werden kann. Beispielsweise würde dann das Übertragungselement 25, z.B. ein Seilzug, bis zu einer in der Zeichnung nicht dargestellten Betätigungseinrichtung im Innenraum des Kraftfahrzeugs 92 verlaufen, beispielsweise zu einem Hand-Betätigungselement im Gepäckabteil des Kraftfahrzeugs 92.

Die Lager 13 und 14 der Kupplungsanordnung 10 sind so ausgestaltet, dass die Kupplungsarme 11 und 12 in Richtung der Nichtgebrauchsstellung N zueinander hin schwenken, d.h. dass der Abstand zwischen den Kupplungskugeln 16 in der Nichtgebrauchsstellung N kleiner ist als in der Gebrauchsstellung G, in der die beiden Kupplungskugeln 16 voneinander weg geschwenkt sind.

An dieser Stelle sei erwähnt, dass die Lager 13 und 14 jeweils eine mehrachsige Schwenkbarkeit der Kupplungsarm 11 und 12 ermöglichen, so dass eine besonders Platz sparende Unterbringung der Kupplungsarme 11 und 12, beliebige Bewegungsabläufe und dergleichen mehr möglich sind.

Selbstverständlich würde aber auch Schwenken um eine einzige Schwenkachse, z.B. eine in Figur 1a eingezeichnete Schwenkachse 27, ausreichen, insbesondere dann, wenn diese entsprechend vorteilhaft schräg orientiert ist, so dass der Kupplungsarm 11 oder 12 unter dem Stoßfänger 94 hindurch tauchen kann, wenn er von der Gebrauchsstellung G in die Nichtgebrauchsstellung N schwenkt bzw. umgekehrt.

Es ist auch möglich, dass der Kupplungsarm 11 oder 12 entlang der Schwenkachse 27 axial verschieblich gelagert ist. Die Schwenkachse 27 könnte auch z.B. vertikal, also nicht schräg, verlaufen.

Prinzipiell ist auch eine Schiebelagerung möglich. So könnten die Kupplungsarme einer erfindungsgemäßen Kupplungsanordnung unter der Unterkante des Stoßfängers 94 vorgeschoben werden, so dass sie in der Nichtgebrauchsstellung N hinter den Stoßfänger 94 zurück verstellt sind, in der Gebrauchsstellung G jedoch vor den Stoßfänger 94 nach hinten, d.h. vor das Heck 91, vorstehen, so dass an ihre jeweilige Kupplungsbasis 17 ein Heckträger, zum Beispiel der Heckträger 50, montiert werden kann. Exemplarisch ist ein solches Schiebelager 28 in Figur 5b eingezeichnet. Die Schiebeachse des Schiebelagers 28 hat beispielsweise bezüglich einer Horizontalen einen Schrägverlauf, so dass sie bezüglich der Fahrtrichtung 93 des Kraftfahrzeugs 92 von (in Fahrtrichtung vorn) oben nach hinten unten in Richtung der Unterkante des Stoßfängers 94 verläuft.

Bei der in den Figuren 3 und 4 dargestellten Kupplungsanordnung 110 sind im Prinzip dieselben Komponenten wie bei der Kupplungsanordnung 10 vorgesehen, wobei allerdings die beiden Kupplungsarme 111 und 112 anhand der Lager 113 und 114 einer Lageranordnung 115 schwenkbar sind. Die Kupplungsarme 111 und 112 sind in der Gebrauchsstellung G zueinander hin verstellt (Figur 3) und in der Nichtgebrauchsstellung N voneinander weg verstellt.

Vorteilhaft ist an einem der Kupplungsarme 11 und/oder 12 oder 111 und/oder 112 eine Steckdose 29, also eine Stromversorgungseinrichtung, zur elektrischen Stromversorgung des Heckträgers 50 vorgesehen. In der Gebrauchsstellung G ist die Steckdose 29 bequem zugänglich und steht jedenfalls hinter das Heck 91 des Kraftfahrzeugs 92 vor.

Die Kupplungsarme 11 und 12 (111 und 112) können beispielsweise von Hand zwischen der Gebrauchsstellung G und der Nichtgebrauchsstellung N verstellt werden. Beispielsweise fallen die Kupplungsarme 11 und 12 aus der Nichtgebrauchsstellung N aufgrund ihres Gewichts und/oder anhand einer Belastung durch eine Feder (nicht dargestellt), von selbst nach unten, wenn sie entriegelt werden, so dass sie ein Bediener bequem ergreifen und in die Gebrauchsstellung G weiter verstellen kann. In die Nichtgebrauchsstellung N kann ein man die Kupplungsarme 11 und 12 beispielsweise mit Schwung verstellen, so dass sie hinter den Stoßfänger 94 zurück schwingen und dort selbsttätig verriegelt werden, weil beispielsweise die Feder auf das Betätigungselement 22 wirkt und die Kupplungsarme 11 und 12 sozusagen automatisch verriegelt. Somit ist als eine bequeme Handhabung möglich.

Es ist allerdings auch vorteilhaft, wenn durch ein motorisches Antriebskonzept, mithin also eine Antriebseinrichtung, die Kupplungsarme 11, 12 oder 111, 112, betätigbar sind:
Mithilfe von schematisch dargestellten Antriebsmotoren 30 kann jeder der Kupplungsarme 11, 12 oder 111, 112 individuell von der Gebrauchsstellung G in die Nichtgebrauchsstellung und/oder umgekehrt verstellt werden. Somit ist also eine Antriebseinrichtung zum Antreiben der Kupplungsarme 11 und 12 bzw. 111 und 112 vorgesehen. Beispielsweise treibt der jeweilige Antriebsmotor 30 das Lagerteil 19 an, zum Beispiel mittels eines Seilzuges, eines Ritzels oder dergleichen. Das ist nicht wesentlich.

Der Heckträger 50 weist ein Tragegestell 51 auf, das zum Auflegen einer Last geeignet ist. Das Tragegestell 51 Ist schwenkbar um eine Achse 52 an einem Grundgestell 53 des Heckträgers 50 gelagert. Das Tragegestell 51 und das Grundgestell 53 sind u-förmig, wobei Seitenschenkel 54 des Tragegestells 51 auf korrespondierenden, darunter liegenden Seitenschenkeln des Grundgestells 53 beim Fahrbetrieb aufliegen. Die Seitenschenkel des Grundgestells 53 stehen von einem Grundschenkel 55 des Grundgestell 53 ab.

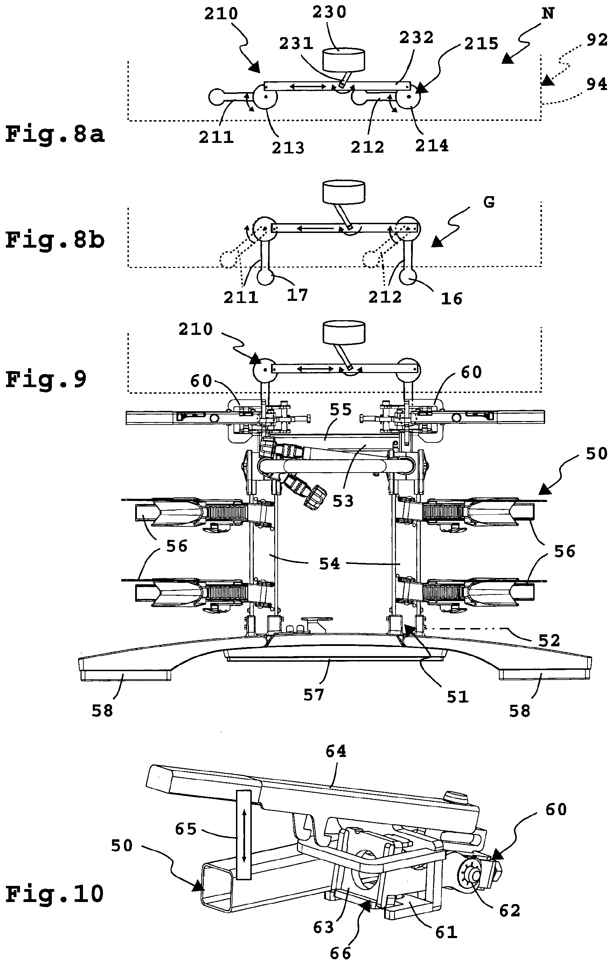

An den Seitenschenkeln 54 des Tragegestells 51 sind Trageelemente 56, beispielsweise Fahrrad-Trägerrinnen beweglich gelagert, so dass sie zwischen die Seitenschenkel 54 bei Nichtgebrauch hinein verstellbar sind und wenig Platz benötigen. Bei Gebrauch werden die Trageelemente 56 vor die Seitenschenkel 54 vor verstellt, was in der Draufsicht gemäß Figur 9 sichtbar ist, so dass man auf ihnen beispielsweise ein Fahrrad abstellen kann. An dem Tragegestell 51 sind noch ein Kennzeichenträger 57 und Leuchten 58 angeordnet, die beispielsweise über die Steckdose 29 mit elektrischer Energie versorgbar sind.

An dem Heckträger 50, insbesondere dessen Grundgestell 53, sind Heckträger-Kupplungseinrichtungen 60 vorgesehen, die an die jeweilige Kupplungsbasis 17 des Kupplungsarms 11, 12 oder 112, 111, ankuppelbar sind.

Die Heckträger-Kupplungseinrichtungen 60 umfassen Klemmeinrichtungen 66. Die Heckträger-Kupplungseinrichtungen 60 haben einen Aufnahmekäfig 61, der einen Aufnahmeraum für die Kupplungsbasis 17, beispielsweise die Kupplungskugel 16, begrenzt. Mithilfe einer Lageranordnung 62 ist ein Klemmteil 63 beweglich relativ zum Aufnahmekäfig 61 gelagert und kann zwischen einer in Figur 10 dargestellten Offenstellung, bei der die Kupplungsbasis 17 bzw. die Kupplungskugel 16 in den Innenraum des Aufnahmekäfigs 61 einführbar ist, und einer Klemmstellung verstellt werden, in der das Klemmteil 63 die Kupplungskugel 16 in dem Innenraum des Aufnahmekäfigs 61 verklemmt. Zur Betätigung des Klemmteils 63 dient beispielsweise ein manuell ergreifbaren Hebel 64. Der Hebel 64 und somit das Klemmteil 63 kann aber auch mittels eines Motors 65 betätigt werden, beispielsweise in Richtung der Klemmstellung und/oder umgekehrt. Zur Stromversorgung des Motors 65 kann die Steckdose 29 dienen.

Wenn die Kupplungsbasen 17 der Kupplungsarme 11 und 12 oder 111 und 112 ihre Gebrauchsstellung G einnehmen, haben Sie einem Querabstand Q zueinander. In genau diesem Querabstand Q sind auch die beiden Heckträger-Kupplungseinrichtungen 60 zueinander angeordnet: Die Kupplungskugeln 16 passen also nur dann in die Aufnahmekäfige 61, wenn sie ihre Gebrauchsstellung G einnehmen. Das kann zugleich dazu dienen, dass der an der Kupplungsanordnung 10 oder 110 montierte Heckträger 50 die jeweilige Kupplungsanordnung 10 oder 110 quasi in der Gebrauchsstellung G zusätzlich sichert oder überhaupt die Sicherungsfunktion oder Fixierfunktion übernimmt. Wenn nämlich die beiden Kupplungsbasen 17 der Kupplungsarme 11, 12 oder 111, 112 in den Aufnahmekäfigen 61 angeordnet sind bzw. von den Kupplungseinrichtungen 60 gehalten werden, können sich die Kupplungsarme 11 und 12 bzw. 111 und 112 nicht mehr in Richtung der Nichtgebrauchsstellung N bewegen. Die Verriegelung oder Fixierung der Kupplungsarme 11 und 12 oder 111 und 112 kann somit allein durch den Heckträger 50 bewirkt werden. Die Verriegelung oder Fixierung der Kupplungsarme 11 und 12 oder 111 und 112 kann durch den Heckträger 50 verbessert werden, der dann die Verriegelungseinrichtung(en) 21 unterstützt. Es kann dann z.B. eine Verriegelungseinrichtung 21 ausreichen, z.B. die am Kupplungsarm 12 angeordnete Verriegelungseinrichtung 21.

Es ist aber auch möglich, dass die Kupplungsanordnung 10 oder 110 dazu beiträgt, dass der Heckträger 50 besonders sicher gehalten wird. Beispielsweise kann die Steuerung 26 die Kupplungsarme 11 und 12 in einem Sinne zu Bewegung in Richtung der Gebrauchsstellung G bewegen, was durch Pfeile in Figur 2a angedeutet ist. Die beiden Kupplungsbasen 17 bewegen sich dabei voneinander weg bzw. werden in diesem Sinne durch die Antriebsmotoren 30 betätigt, was dazu führt, dass nicht nur die Kupplungsarme 11 und 12 bezüglich des Querträgers 90 und somit des Kraftfahrzeugs 92 sicher in der Fixierstellung bleiben, sondern dass auch der Heckträger 50 quasi an den Kupplungsarmen 11 und 12 verspannt wird.

Selbstverständlich ist dieses Antriebsprinzip auch bei der Kupplungsanordnung 110 realisierbar, wobei dann die beiden Kupplungsarme 111 und 112 in einem Sinne zueinander hin betätigt werden, so dass sie den Heckträger 50 quasi zwischen sich einklemmen. Auch das wirkt im Sinne einer Verspannung und eines besonders guten Halts.

Eine in den Figuren 8a und 8b dargestellte Kupplungsanordnung 210 ist prinzipiell ähnlich aufgebaut wie die beiden oben erläuterten Kupplungsanordnungen 10 und 110. Allerdings sind die Kupplungsarme 211 und 212 dieser Kupplungsanordnung 210 durch einen einzigen Antriebsmotor 230 betätigbar. Der Antriebsmotor 230 wirkt über einen Lenkarm 231 auf ein Kopplungsorgan 232, das die Kupplungsarme 211 und 212 antreibt und miteinander koppelt. Das durch den Lenkarm 231 und das Kopplungsorgan 232 gebildete Getriebe ist eine Art Kurbelgetriebe. Selbstverständlich ist auch eine Steuerung für den Antriebsmotor 230 vorteilhaft, beispielsweise eine Ansteuerung durch die oben erläuterte Steuerung 26.

Es versteht sich, dass ein Antrieb für Kupplungsarme einer erfindungsgemäßen Kupplungsanordnung auch andere Getriebearten umfassen können, zum Beispiel ein Zahngetriebe, Seilzuggetriebe oder dergleichen.

Weiterhin muss keine starre Kopplung zwischen den Kupplungsarmen vorhanden sein, wenn ein einzelner Antriebsmotor mehrere Kupplungsarme betätigen soll, wie es zum Beispiel mit dem Kopplungsorgan 232 realisiert ist. Beispielsweise könnten Kupplungsarme auch durch einen Seilzug, einen Riemenantrieb oder dergleichen miteinander bewegungsgekoppelt sein.

Die Kupplungsarme 211 und 212 sind mittels Lagern 213 und 214 einer Lageranordnung 215 schwenkbar gelagert. Schwenkachsen der Lager 213 und 214 verlaufen beispielsweise vertikal, wobei dies nur exemplarisch zu verstehen ist. Man erkennt aus der Draufsicht, dass die beiden Kupplungsarme 211 und 212 gleichsinnig schwenken, wenn sie vom Antriebsmotor 230 angetrieben werden.

Es versteht sich, dass eine Ankopplung des Heckträgers über einen Kugelkopf und eine diesen klemmende Klemmeinrichtung eines Heckträgers, wie bei den Kupplungsanordnungen 10, 110 und 210 der Fall, nur eine Möglichkeit darstellt, den Heckträger an der Kupplungsanordnung zu befestigen. Beispielsweise wäre es auch möglich, das bei dem Heckträger 50 anstelle der Klemmeinrichtungen Kupplungsköpfe vorhanden sind, die dann in entsprechende Klemmeinrichtungen an den Kupplungsarmen, zum Beispiel den Kupplungsarmen 11 und 12, eingreifen, um die Kupplung zu bewirken.

Aber auch andere Kupplungskonzepte, insbesondere Steckkonzepte, sind ohne weiteres möglich:
Beispielsweise könnten an einem Heckträger 150, der ansonsten dem Heckträger 50 im Wesentlichen gleicht, anstelle der Kupplungseinrichtungen 60 Kupplungseinrichtungen 160 vorgesehen sein, die in den Figuren 6a und 6b dargestellt sind.

Die Kupplungseinrichtungen 160 weisen beispielsweise an Tragarmen 161 angeordnete Steckvorsprünge 162 auf, für die an nicht näher dargestellten Kupplungsarmen, von denen ein Kupplungsarm 311 exemplarisch dargestellt ist, Steckaufnahmen 32 vorgesehen sind. Die Steckaufnahme 32 ist an einem freien Ende des Kupplungsarms 311 angeordnet, wo beispielsweise beim Kupplungsarm 11 die Kupplungsbasis 17 angeordnet ist. Mithin bildet die Steckaufnahme 32 eine Kupplungsbasis 317. An dem Steckvorsprung 162 sind Formstücke 163 beweglich gelagert, die durch ein Betätigungselement 164 nach radial außen vor den Außenumfang des Steckvorsprungs 162 vor verstellbar sind, so dass sie in eine Verriegelungsaufnahme 33 im Innenraum der Steckaufnahme 32 eingreifen können und so den Steckvorsprung 162 in der Steckaufnahme 32 verriegeln.

Die Formstücke 163 und das Betätigungselement 164 bilden Bestandteile einer Klemmeinrichtung 166 und/oder Fixiereinrichtung zum Klemmen oder Fixieren des Steckvorsprungs 162 an der Kupplungsbasis bzw. in der Steckaufnahme 32.

Zur Betätigung des Betätigungselements 164 dient beispielsweise ein Schwenkhebel 165 oder ein sonstiges Betätigungsorgan. Selbstverständlich ist es möglich, das Betätigungselement 164 auch motorisch zu betätigen.

Vor den Steckvorsprung 162 stehen seitlich Formschlusskonturen 167 vor, die zum Eingriff in Formschlussaufnahmen 34 an der Einführöffnung der Steckaufnahme 32 vorgesehen sind. Die Formschlusskonturen 167 und die Formschlussaufnahmen 34 bewirken eine Verdrehsicherung.

Ein im Wesentlichen dem Heckträger 50 ähnelnder Heckträger 250 gemäß Figuren 7a und 7b hat Kupplungseinrichtungen 260, von denen eine beispielhaft dargestellt ist. Die Kupplungseinrichtungen 260 sind beispielsweise am Grundschenkel 55 des Grundgestells 53 angeordnet. Ein Steckvorsprung 262 ist in eine Steckaufnahme 432, die an einem exemplarisch dargestellten Kupplungsarm 411 angeordnet ist, einsteckbar. Der Kupplungsarm 411 sowie ein weiterer, nicht dargestellter Kupplungsarm sind beispielsweise in der Art der Kupplungsarme 11 und 12 beweglich an einem Querträger eines Kraftfahrzeugs gelagert. Jedenfalls bildet die Steckaufnahme 432 einen Bestandteil einer Kupplungsbasis 417 zur Befestigung der Heckträger-Kupplungseinrichtungen 260.

Am Außenumfang der im Querschnitt polygonalen, beispielsweise rechteckigen oder quadratischen, Steckaufnahme 432 ist ein Gewindering 433 vorgesehen, der zum Aufschrauben einer Befestigungsmutter 263 dient. Die Befestigungsmutter 263 ist in der Art einer Überwurfhülse drehbar gelagert. Im Innenraum der Befestigungsmutter 263 ist der Steckvorsprung 262 angeordnet. Wenn der Steckvorsprung 262 in die Steckaufnahme 432 eingesteckt ist, schlägt sein freies Ende beispielsweise an einem Endanschlag 435 an. Zudem kann die Befestigungsmutter 263 auf den Gewindering 433 aufgeschraubt werden, so dass die Heckträger-Kupplungseinrichtungen 260 an der die Steckaufnahme 432 umfassenden Kupplungsbasis sicher befestigt ist.

Zum Antreiben der Befestigungsmutter 263, die einen Bestandteil einer heckträgerseitigen Fixiereinrichtung oder Verriegelungseinrichtung bzw. einen Bestandteil der Heckträger-Kupplungseinrichtung 260 bildet, kann ein Antriebsmotor 264 vorgesehen sein. Der Antriebsmotor 264 kämmt beispielsweise mit einer in der Zeichnung nicht sichtbaren Verzahnung am Außenumfang der Befestigungsmutter 263. Der Antriebsmotor 264 wird zweckmäßigerweise über das Bordnetz 95 mit elektrischer Energie versorgt. Zweckmäßigerweise ist die Steuerung 26 dazu vorgesehen und ausgestaltet, den Antriebsmotor 264 anzusteuern, zum Beispiel indem dieser über eine der Steckdosen 29 mit elektrischer Energie versorgt wird.

An dieser Stelle sei bemerkt, dass selbstverständlich auch eine Fixiereinrichtung einer erfindungsgemäßen Kupplungsanordnung zum Fixieren eines Heckträgers Kuppelelemente und/oder Verriegelungselemente und/oder Kupplungseinrichtungen in der Art der Kupplungseinrichtungen 60, 160 oder 260 aufweisen kann. In diesem Fall wäre dann beispielsweise der Steckvorsprung 262 am Kupplungsarm 411 angeordnet. Dort kann dann zweckmäßigerweise auch der Antriebsmotor 264 zum Antreiben der Fixierung, zum Beispiel der Befestigungsmutter 263, vorgesehen sein.

Der Antriebsmotor 264 ist beim Ausführungsbeispiel zwar als ein Verriegelungsantrieb und zugleich als ein Entriegelungsantrieb ausgestaltet. Selbstverständlich kann der Antriebsmotor auch als reiner Entriegelungsantrieb oder reiner Verriegelungsantrieb ausgestaltet sein. Beispielsweise wirkt ein solcher Entriegelungsantrieb gegen die Kraft einer in Richtung der Verriegelung oder Fixierung wirkenden Feder. Das ist nicht nur bei der Heckträger-Kupplungseinrichtung 262 möglich, sondern auch bei der oben bereits angesprochenen umgekehrten Konfiguration, bei der der Antriebsmotor einen Bestandteil einer Fixiereinrichtung an einer Kupplungsbasis der Kupplungsanordnung bildet.

Beispielsweise kann eine Fixiereinrichtung 340 oder 440 gebildet sein, wenn die Komponenten der Heckträger-Kupplungseinrichtungen 160 oder 260 an schematisch dargestellten Kupplungsarmen 311' oder 411' angeordnet sind.

## Patentansprüche

1. Kupplungsanordnung für ein Kraftfahrzeug zum Befestigen eines Heckträgers (50), mit einem ersten Kupplungsarm (11,12) und einem zweiten Kupplungsarm (11, 12), die an einem Heck des Kraftfahrzeugs in einem Abstand in Fahrzeug-Querrichtung des Kraftfahrzeugs befestigbar sind und an ihren jeweiligen freien Endbereichen eine Kupplungsbasis aufweisen, die zum lösbaren Befestigen einer ersten und einer zweiten Heckträger-Kupplungseinrichtung (60; 160; 260) des Heckträgers (50) eingerichtet sind, und mit einer Lageranordnung (15; 115; 215), mittels derer die Kupplungsarme zwischen einer Gebrauchsstellung, in der die Kupplungsbasen (17; 317; 417)im am Kraftfahrzeug montierten Zustand der Kupplungsanordnung (10; 110; 210) nach hinten vor eine Heckkontur des Kraftfahrzeugs zur Befestigung des Heckträgers (50) vorstehen, und einer Nichtgebrauchsstellung (N), in der die Kupplungsbasen (17; 317; 417) im am Kraftfahrzeug montierten Zustand der Kupplungsanordnung (10; 110; 210) hinter und/oder unter die Heckkontur des Kraftfahrzeugs zurück verstellt sind, beweglich an dem Kraftfahrzeug lagerbar sind, **dadurch gekennzeichnet, dass** ein jeweiliger Kupplungsarm (11, 12) zum Verstellen seiner Kupplungsbasis (17; 317; 417) mittels der Lageranordnung (15; 115; 215) so an dem Kraftfahrzeug (94), lagerbar ist, dass die Kupplungsbasis (17; 317; 417) unter einem Stoßfänger (94) des Kraftfahrzeugs (92) vorbei bewegbar ist, und dass an mindestens einem der Kupplungsarme eine elektrische Stromversorgungseinrichtung (11, 12), beispielsweise eine Steckdose, zur elektrischen Stromversorgung des Heckträgers (50) angeordnet ist, und dass der erste und der zweite Kupplungsarm (11, 12) bei einer Verstellung zwischen der Gebrauchsstellung (G) und der Nichtgebrauchsstellung (N) eine gegensinnige Bewegung aufeinander zu oder voneinander weg durchlaufen.

2. Kupplungsanordnung nach Anspruch 1, **dadurch gekennzeichnet, dass** die Lageranordnung (15; 115; 215) mindestens ein Schwenklager (13, 14) und/oder mindestens ein Schiebelager aufweist.

3. Kupplungsanordnung nach Anspruch 1 oder 2, **dadurch gekennzeichnet, dass** die Lageranordnung (15; 115; 215) für jeden Kupplungsarm (11, 12) ein individuelles Lager (13, 14) aufweist, so dass der jeweilige Kupplungsarm (11, 12) unabhängig von dem anderen Kupplungsarm (11, 12) bezüglich einer Karosserie des Kraftfahrzeugs beweglich lagerbar ist oder dass beide Kupplungsarme (11, 12) zur simultanen Bewegung gemeinsam an einem beweglichen Lagerteil fest oder beweglich angeordnet sind.

4. Kupplungsanordnung nach einem der vorhergehenden Ansprüche, **dadurch gekennzeichnet, dass** sie eine Verriegelungseinrichtung (21) zum Verriegeln mindestens eines der Kupplungsarme (11, 12) in der Gebrauchsstellung (G) und/oder der Nichtgebrauchsstellung (N) aufweist.

5. Kupplungsanordnung nach einem der vorhergehenden Ansprüche, **dadurch gekennzeichnet, dass** sie eine manuelle oder mindestens einen Motor aufweisende Antriebseinrichtung zum Antreiben mindestens eines Kupplungsarms (11, 12) zwischen der Gebrauchsstellung (G) und der Nichtgebrauchsstellung (N) aufweist.

6. Kupplungsanordnung nach Anspruch 5, **dadurch gekennzeichnet, dass** die Antriebseinrichtung zum Verspannen des Heckträgers (50) mit den Kupplungsarmen (11, 12) ausgestaltet ist, wenn der Heckträger (50) an den Kupplungsarmen (11, 12) montiert ist.

7. Kupplungsanordnung nach einem der vorhergehenden Ansprüche, **dadurch gekennzeichnet, dass** sie eine Steuerung zum Ansteuern eines Antriebsmotors (24, 30; 230) zum Antreiben mindestens eines Kupplungsarms (11, 12) und/oder eines Antriebsmotors (24, 30; 230) einer Verriegelungseinrichtung (21) zum Verriegeln mindestens eines der Kupplungsarme (11, 12) und/oder eines Antriebsmotors (264) der Heckträger-Kupplungseinrichtung (60; 160; 260) des Heckträgers (50) und/oder eines Antriebsmotors (264 einer fahrzeugseitigen Fixiereinrichtung (340, 440) zur Fixierung des Heckträgers (50) einen mindestens einem der Kupplungsarme (11, 12) aufweist.

8. Kupplungsanordnung nach Anspruch 7, **dadurch gekennzeichnet, dass** die Steuerung zur wiederholten Ansteuerung des Antriebsmotors (24, 30; 230) in Richtung der Gebrauchsstellung (G) oder der Nichtgebrauchsstellung (N) des mindestens einen Kupplungsarms (11, 12) während eines Fahrbetriebs im Sinne eines Beibehaltens der Gebrauchsstellung (G) oder der Nichtgebrauchsstellung (N) ausgestaltet ist und/oder dass die Steuerung während eines Fahrbetriebs des Kraftfahrzeugs eine Bewegung des Antriebsmotors (24, 30; 230) im Sinne eines Verlassens der Gebrauchsstellung (G) oder der Nichtgebrauchsstellung (N) des Kupplungsarms (11, 12) und/oder eine Entriegelung der Verriegelungseinrichtung (21) blockiert.

9. Kupplungsanordnung nach einem der vorhergehenden Ansprüche, **dadurch gekennzeichnet, dass** die Lageranordnung (15; 115; 215) so ausgestaltet ist, dass die Kupplungsarme (11, 12) gegenüber einer Bewegung aus der Gebrauchsstellung (G) in die Nichtgebrauchsstellung (N) blockiert sind, wenn der Heckträger (50) an den Kupplungsarmen (11, 12) montiert ist.

10. Kupplungsanordnung nach einem der vorhergehenden Ansprüche, **dadurch gekennzeichnet, dass** mindestens eine Kupplungsbasis (17; 317; 417) einen Kugelkopf oder eine Steckaufnahme (32) oder einen Steckvorsprung zur Montage der ersten oder zweiten Heckträger-Kupplungseinrichtung (60; 160; 260) umfasst.

11. Kupplungsanordnung nach einem der vorhergehenden Ansprüche, **dadurch gekennzeichnet, dass** mindestens eine Kupplungsbasis (17; 317; 417) eine insbesondere motorisch antreibbare Fixiereinrichtung (340, 440) zum Fixieren der jeweiligen Heckträger-Kupplungseinrichtung (60; 160; 260) aufweist.

12. Heckträger (50) als Bestandteil eines Systems umfassend eine Kupplungsanordnung (10; 110; 210) nach einem der vorhergehenden Ansprüche, **dadurch gekennzeichnet, dass** der Heckträger (50) eine erste und eine zweite Heckträger-Kupplungseinrichtung (60; 160; 260) aufweist, die in einem Querabstand (Q) zueinander an einer Tragbasis des Heckträgers (50) angeordnet sind und an die jeweilige Kupplungsbasis (17; 317; 417) des ersten und des zweiten Kupplungsarms (11, 12) der Kupplungsanordnung (10; 110; 210) ankuppelbar sind.

13. Heckträger nach Anspruch 12, **dadurch gekennzeichnet, dass** die erste und/oder die zweite Heckträger-Kupplungseinrichtung (60; 160; 260) eine insbesondere motorisch antreibbare Klemmeinrichtung zum Verklemmen mit der jeweiligen Kupplungsbasis (17; 317; 417) aufweisen.

14. Heckträger nach Anspruch 12 oder 13, **dadurch gekennzeichnet, dass** die erste und/oder die zweite Heckträger-Kupplungseinrichtung (60; 160; 260) eine Steckaufnahme oder einen Steckvorsprung und/oder einen Aufnahmekäfig (61) zur Montage an der jeweiligen Kupplungsbasis (17; 317; 417) der Kupplungsanordnung (10; 110; 210) umfasst.

## Claims

1. Coupling assembly for a motor vehicle for attaching a rear carrier (50), with a first coupling arm (11, 12) and a second coupling arm (11, 12) which may be mounted on a rear section of the motor vehicle, spaced apart in the vehicle transverse direction of the motor vehicle and having a coupling base at their respective free end sections for releasable attachment of a first and a second rear carrier coupling device (60; 160; 260) of the rear carrier (50); and with a bearing assembly (15; 115; 215) which may be mounted movably on the motor vehicle between a position of use in which the coupling bases (17; 317; 417), with the coupling assembly (10; 110; 210) mounted on the motor vehicle, extend rearwards beyond a rear contour of the motor vehicle for attaching the rear carrier (50), and an inoperative position (N) in which the coupling bases (17; 317; 417), with the coupling assembly (10; 110; 210) mounted on the motor vehicle, are recessed behind and/or below the rear contour of the motor vehicle, **characterised in that** each coupling arm (11, 12), for the adjusting of its coupling base (17; 317; 417) is so movably mounted on the motor vehicle (94) by means of the bearing assembly (15; 115; 215) that the coupling base (17; 317; 417) may be moved past underneath a bumper (94) of the motor vehicle (92), and **in that** an electric power supply device (11, 12), for example a socket, is provided on at least one of the coupling arms for supplying electric power to the rear carrier (50), and **in that** the first and the second coupling arm (11, 12), when moving between the position of use (G) and the inoperative position (N), perform an opposing movement towards each other or away from each other.

2. Coupling assembly according to claim 1, **characterised in that** the bearing assembly (15; 115; 215) has at least one swivel bearing (13, 14) and/or at least one sliding bearing.

3. Coupling assembly according to claim 1 or 2, **characterised in that** the bearing assembly (15; 115; 215) has an individual bearing (13, 14) for each coupling arm (11, 12), so that the respective coupling arm (11, 12) may be movably mounted independently of the other coupling arm (11, 12) with respect to a body of the motor vehicle, or that both coupling arms (11, 12) are mounted fixed or movably for simultaneous movement on a common bearing part.

4. Coupling assembly according to any of the preceding claims, **characterised in that** it has a locking device (21) for locking at least one of the coupling arms (11, 12) in the position of use (G) and/or the inoperative position (N).

5. Coupling assembly according to any of the preceding claims, **characterised in that** it has a drive unit, manual or having at least one motor, for driving at least one coupling arm (11, 12) between the position of use (G) and the inoperative position (N).

6. Coupling assembly according to claim 5, **characterised in that** the drive unit is designed for clamping the rear carrier (50) to the coupling arms (11, 12), when the rear carrier (50) is mounted on the coupling arms (11, 12).

7. Coupling assembly according to any of the preceding claims, **characterised in that** it has a control unit for actuating a drive motor (24, 30; 230) to drive at least one of the coupling arms (11, 12), and/or a drive motor (24, 30; 230) of a locking device (21) for locking at least one of the coupling arms (11, 12), and/or a drive motor (264) of the rear carrier coupling device (60; 160; 260) of the rear carrier (50), and/or a drive motor (264) of a vehicle-side locating device (340, 440) for fixing the rear carrier (50) to at least one of the coupling arms (11, 12).

8. Coupling assembly according to claim 7, **characterised in that** the control unit is designed for repeated driving of the drive motor (24, 30; 230) towards the position of use (G) or the inoperative position (N) of the coupling arm or arms (11, 12) during vehicle operation for the purpose of maintaining the position of use (G) or the inoperative position (N), and/or that the control unit, during operation of the motor vehicle, blocks any acceleration of the drive motor (24, 30; 230) for the purpose of leaving the position of use (G) or the inoperative position (N) of the coupling arm (11, 12), and/or any unlocking of the locking device (21).

9. Coupling assembly according to any of the preceding claims, **characterised in that** the bearing assembly (15; 115; 215) is so designed that the coupling arms (11, 12) are blocked from movement out of the position of use (G) into the inoperative position (N) when the rear carrier (50) is mounted on the coupling arms (11, 12).

10. Coupling assembly according to any of the preceding claims, **characterised in that** at least one coupling base (17; 317; 417) comprises a trailer ball or a plug-in receptacle (32) or a plug-in projection for mounting the first or second rear carrier coupling device (60; 160; 260).

11. Coupling assembly according to any of the preceding claims, **characterised in that** at least one coupling base (17; 317; 417) has an in particular motor-drivable locating device (340, 440) for fixing the respective rear carrier coupling device (60; 160; 260)..

12. Rear carrier as part of a system comprising a coupling assembly (10; 110; 210) according to any of the preceding claims, **characterised in that** the rear carrier (50) has a first and a second rear carrier coupling device (60; 160; 260), arranged with lateral clearance (Q) from one another on a support base of the rear carrier (50), and capable of being coupled to the respective coupling base (17; 317; 417) of the first and second coupling arms (11, 12) of the coupling assembly (10; 110; 210).

13. Rear carrier according to claim 12, **characterised in that** the first and/or the second rear carrier coupling device (60; 160; 260), have or has a clamping device, in particular able to be motorised, for clamping to the respective coupling base (17; 317; 417).

14. Rear carrier according to claim 12 or 13, **characterised in that** the first and/or the second rear carrier coupling device (60; 160; 260) include or includes a plug-in receptacle or a plug-in projection and/or a holding cage (61) for fitting to the respective coupling base (17; 317; 417) of the coupling assembly (10; 110; 210).

## Revendications

1. Agencement de couplage pour un véhicule automobile pour la fixation d'un support de toit (50), avec un premier bras de couplage (11, 12) et un deuxième bras de couplage (11, 12), qui peuvent être fixés à un arrière du véhicule automobile à une distance dans le sens transversal de véhicule du véhicule automobile et présentent à leurs zones d'extrémité libres respectives une base de couplage, qui sont aménagées pour la fixation amovible d'un premier et d'un deuxième dispositif de couplage de support de toit (60 ; 160 ; 260) du support de toit (50) ; et avec un agencement de palier (15 ; 115 ; 215) au moyen duquel les bras de couplage peuvent être logés de manière mobile au niveau du véhicule automobile entre une position d'utilisation, dans laquelle les bases de couplage (17 ; 317 ; 417) font saillie à l'état monté sur le véhicule automobile de l'agencement de couplage (10 ; 110 ; 210) vers l'arrière devant un contour arrière du véhicule automobile pour la fixation du support de toit (50), et une position de non-utilisation (N), dans laquelle les bases de couplage (17 ; 317 ; 417) sont ramenées à l'état monté sur le véhicule automobile de l'agencement de couplage (10 ; 110 ; 210) derrière et/ou sous le contour arrière du véhicule automobile, **caractérisé en ce qu'**un bras de couplage (11, 12) respectif pour le réglage de sa base de couplage (17 ; 317 ; 417) peut être logé au niveau du véhicule automobile (94) au moyen de l'agencement de palier (15 ; 115 ; 215) de telle sorte que la base de couplage (17 ; 317 ; 417) peut passer sous un pare-chocs (94) du véhicule automobile (92), et
qu'un dispositif d'alimentation en courant électrique, par exemple une prise, destiné à l'alimentation en courant électrique du support de toit (50), est disposé sur au moins un des bras de couplage, et que le premier et le deuxième bras de couplage (11, 12) exécutent un déplacement en sens opposé l'un vers l'autre ou de manière à s'éloigner l'un de l'autre entre la position d'utilisation (G) et la position de non-utilisation (N).

2. Agencement de couplage selon la revendication 1, **caractérisé en ce que** l'agencement de palier (15; 115; 215) présente au moins un palier pivotant (13, 14) et/ou au moins un palier coulissant.

3. Agencement de couplage selon la revendication 1 ou 2, **caractérisé en ce que** l'agencement de palier (15 ; 115 ; 215) présente un palier individuel (13, 14) pour chaque bras de couplage (11, 12) de sorte que le bras de couplage respectif (11, 12) peut être logé mobile par rapport à une carrosserie du véhicule automobile indépendamment de l'autre bras de couplage (11, 12) ou que les deux bras de couplage (11, 12) sont agencés de manière fixe ou mobile pour le déplacement simultané ensemble au niveau d'une partie de palier mobile.

4. Agencement de couplage selon l'une quelconque des revendications précédentes, **caractérisé en ce qu'**il présente un dispositif de verrouillage (21) pour le verrouillage d'au moins un des bras de couplage (11, 12) dans la position d'utilisation (G) et/ou la position de non-utilisation (N).

5. Agencement de couplage selon l'une quelconque des revendications précédentes, **caractérisé en ce qu'**il présente un dispositif d'entraînement manuel ou présentant au moins un moteur pour l'entraînement d'au moins un bras de couplage (11, 12) entre la position d'utilisation (G) et la position de non-utilisation (N).

6. Agencement de couplage selon la revendication 5, **caractérisé en ce que** le dispositif d'entraînement est configuré pour le serrage du support de toit (50) avec les bras de couplage (11, 12), lorsque le support de toit (50) est monté sur les bras de couplage (11, 12).

7. Agencement de couplage selon l'une quelconque des revendications précédentes, **caractérisé en ce qu'**il présente une commande pour la commande d'un moteur d'entraînement (24, 30 ; 230) pour l'entraînement d'au moins un bras de couplage (11, 12) et/ou d'un moteur d'entraînement (24, 30 ; 230) d'un dispositif de verrouillage (21) pour le verrouillage d'au moins un des bras de couplage (11, 12) et/ou d'un moteur d'entraînement (264) du dispositif de couplage de support de toit (60 ; 160 ; 260) du support de toit (50) et/ou d'un moteur d'entraînement (264) d'un dispositif de fixation côté véhicule (340, 440) pour la fixation du support de toit (50) un au moins un des bras de couplage (11, 12).

8. Agencement de couplage selon la revendication 7, **caractérisé en ce que** la commande est configurée pour la commande répétée du moteur d'entraînement (24, 30 ; 230) en direction de la position d'utilisation (G) ou de la position de non-utilisation (N) de l'au moins un bras de couplage (11, 12) pendant un mode de conduite dans le sens d'un maintien de la position d'utilisation (G) ou de la position de non-utilisation (N) et/ou que la commande pendant un mode de conduite du véhicule automobile bloque un déplacement du moteur d'entraînement (24, 30 ; 230) dans le sens d'un départ de la position d'utilisation (G) ou de la position de non-utilisation (N) du bras de couplage (11, 12) et/ou un déverrouillage du dispositif de verrouillage (21).

9. Agencement de couplage selon l'une quelconque des revendications précédentes, **caractérisé en ce que** l'agencement de palier (15 ; 115 ; 215) est configuré de telle sorte que les bras de couplage (11, 12) sont bloqués par rapport à un déplacement de la position d'utilisation (G) à la position de non-utilisation (N), lorsque le support de toit (50) est monté sur les bras de couplage (11, 12).

10. Agencement de couplage selon l'une quelconque des revendications précédentes, **caractérisé en ce qu'**au moins une base de couplage (17 ; 317 ; 417) comprend une tête sphérique ou un logement d'enfichage (32) ou une saillie d'enfichage pour le montage du premier ou deuxième dispositif de couplage de support de toit (60 ; 160 ; 260).

11. Agencement de couplage selon l'une quelconque des revendications précédentes, **caractérisé en ce qu'**au moins une base de couplage (17 ; 317 ; 417) présente un dispositif de fixation pouvant être entraîné en particulier par moteur (340, 440) pour la fixation du dispositif de couplage de support de toit (60 ; 160 ; 260) respectif.

12. Support de toit (50) en tant qu'élément d'un système comprenant un agencement de couplage (10; 110; 210) selon l'une quelconque des revendications précédentes, **caractérisé en ce que** le support de toit (50) présente un premier et un deuxième dispositif de couplage de support de toit (60 ; 160 ; 260), qui sont agencés à une distance transversale (Q) l'un par rapport à l'autre sur une base de support du support de toit (50) et sont accouplables au niveau de la base de couplage respective (17 ; 317 ; 417) du premier et du deuxième bras de couplage (11, 12) de l'agencement de couplage (10 ; 110 ; 210).

13. Support de toit selon la revendication 12, **caractérisé en ce que** le premier et/ou le deuxième dispositif de couplage de support de toit (60 ; 160 ; 260) présentent un dispositif de serrage pouvant être entraîné en particulier par moteur pour le serrage avec la base de couplage respective (17 ; 217 ; 417).

14. Support de toit selon la revendication 12 ou 13, **caractérisé en ce que** le premier et/ou le deuxième dispositif de couplage de support de toit (60 ; 160 ; 260) comprend un logement d'enfichage ou une saillie d'enfichage et/ou une cage de logement (61) pour le montage sur la base de couplage respective (17 ; 317 ; 417) de l'agencement de couplage (10 ; 110 ; 210).
